# FASCICULE DE BREVET EUROPEEN

(11) **EP 0 768 551 B1**
(45) Date de publication et mention de la délivrance du brevet: **02.05.2002**
(21) Numéro de dépôt: 96402110.9
(22) Date de dépôt: 03.10.1996
(51) Int. Cl.: G02B 13/06, G02B 17/00, G08B 13/193, G02B 6/06

(54) **Système optique pour des vues à grand champ**
Optisches System zum Betrachten breiter Blickfelder
Optical system for wide field viewing

(30) Priorité: 11.10.1995 FR 9511910
(43) Date de publication de la demande: 16.04.1997
(73) Titulaire: SOCIETE D'APPLICATIONS GENERALES D'ELECTRICITE ET DE MECANIQUE SAGEM, 75116 Paris (FR)
(72) Inventeur: Cordier, Chantal, 94270 Le Kremlin Bicetre (FR); Lacuve, Jean, 91200 Athis Mons (FR)
(74) Mandataire: Lapoux, Roland

(56) Documents cités:
- CA-A- 1 073 715
- FR-A- 2 252 043
- US-A- 3 786 181
- US-A- 5 105 299
- PATENT ABSTRACTS OF JAPAN vol. 011, no. 108 (E-495), 4 Avril 1987 & JP 61 255155 A (MITSUBISHI ELECTRIC CORP), 12 Novembre 1986,
- PATENT ABSTRACTS OF JAPAN vol. 010, no. 212 (P-480), 24 Juillet 1986 & JP 61 052603 A (FUJI ELECTRIC CO LTD), 15 Mars 1986,
- PATENT ABSTRACTS OF JAPAN vol. 009, no. 137 (P-363), 12 Juin 1985 & JP 60 019120 A (OLYMPUS KOGAKU KOGYO KK), 31 Janvier 1985,

## Description

La présente invention concerne un système optique à grand champ qui est capable de surveiller des zones qui ne peuvent être couvertes directement par le champ d'un dispositif de prise de vue connu.

Plus particulièrement l'invention appartient au domaine de la surveillance de zones.

Les dispositifs de prise de vue actuels fournissent dans la plupart des cas une image de la zone à surveiller qui est rectangulaire, avec une largeur en azimut et une hauteur en site de dimensions voisines, par exemple dans un rapport de 4/3 pour le format standard de télévision. Par exemple, un tel dispositif de prise de vue équipé d'un objectif de focale adaptée surveille une zone de 40° x 30°.

Toutefois, de plus en plus, il est nécessaire de surveiller des zones ayant une grande largeur angulaire et une faible hauteur angulaire, typiquement de 120° x 10°, c'est-à-dire un champ azimutal relativement élevé par rapport à un champ en site relativement faible. Par exemple, un champ linéaire très large est nécessaire en balistique pour relever quelques points de la trajectoire d'un projectile ou d'un mobile, ou dans le gardiennage pour surveiller une longue clôture.

Des dispositifs de prise de vue connus sont bien souvent du type détecteur infrarouge à état solide. Le détecteur infrarouge comprend une matrice de capteurs constitué chacun par une cellule à transfert de charge CCD (Charge Coupled Device). Ces détecteurs opèrent en général dans la bande de longueur d'ondes de 3 à 5 micromètres ou dans la bande de 8 à 12 micromètres.

Une première solution pourrait consister en un nouveau détecteur dont le champ couvrirait directement la vue à prendre, typiquement de 120° x 10°. Le développement d'un tel détecteur spécifique est alors très onéreux.

Une autre solution pourrait consister à associer un détecteur connu à un système optique anamorphosant. Toutefois les pixels de l'image prise sont également anamorphosants et l'image résultante présente des défauts d'homogénéïté entre les résolutions horizontale et verticale.

Une troisième solution pourrait consister à juxtaposer trois détecteurs standard qui couvriraient chacun 1/3 du champ azimutal, soit 120°/3 = 40°. Cette dernière solution est d'un coût prohibitif.

La demande de brevet JP 61 255155A divulgue un capteur vidéo optique selon cette troisième solution, comprenant un dispositif de prise de vue à trois photodétecteurs (C₁,C₂,C₃) juxtaposés suivant la hauteur et couvrant chacun le tiers de la largeur en azimut d'un grand champ à travers un système optique comprenant trois miroirs respectifs (6, 7, 8). Un miroir central est disposé en face de l'axe optique du dispositif de prise de vue et incliné par rapport à celui-ci. Les deux autres miroirs sont disposés latéralement à l'axe optique et inclinés par rapport à celui-ci. Les trois miroirs font face aux photodétecteurs respectivement de manière à réfléchir chacun un tiers respectif de la largeur du grand champ correspondant à une scène orientée vers l'arrière des photodétecteurs. Une telle disposition ne peut pas être adaptée sur un dispositif de prise de vue connu pour lequel la visée est dirigée vers l'avant du dispositif de prise de vue, et nécessite par conséquent une nouvelle conception du dispositif de prise de vue.

Un système optique à trois miroirs analogue au précédent est également décrit dans le brevet canadien CA 1073715.

La présente invention vise à fournir un système optique adaptable sur un dispositif de prise de vue connu au moyen duquel des vues présentant un champ nettement plus large que celui couvert par le dispositif de prise de vue peuvent être prises, ce système optique présentant un surcoût inférieur à celui des solutions envisagées ci-dessus.

A cette fin, un système optique suivant la revendication 1 est défini. Les revendications dépendantes 2-8 concernent des modes de réalisation additionels.

D'autres caractéristiques et avantages de la présente invention apparaîtront plus clairement à la lecture de la description suivante de plusieurs réalisations préférées de l'invention en référence aux dessins annexés correspondants dans lesquels :
- les figures 1A, 1B, 1C et 1D montrent respectivement un format ou champ standard d'image prise par un dispositif de prise de vue classique, un champ à surveiller, le champ à surveiller partagé en trois bandeaux, et les trois bandeaux juxtaposés dans le format standard, pour expliquer le fonctionnement d'un système optique conforme à l'invention ;
- la figure 2 est une vue schématique de côté vertical d'un système optique à miroirs et prismes selon une première réalisation de l'invention;
- les figures 3, 4 et 5 sont des vues de dessus d'une voie optique supérieure, d'une voie optique médiane et d'une voie optique inférieure dans le système optique selon la première réalisation montrée à la figure 2, respectivement;
- la figure 6 est une vue schématique de côté vertical d'un système optique à faisceaux de fibres optiques selon une seconde réalisation de l'invention; et
- les figures 7, 8 et 9 sont des vues de dessus d'une voie optique supérieure, d'une voie optique médiane et d'une voie optique inférieure dans le système optique selon la seconde réalisation montrée à la figure 5, respectivement.

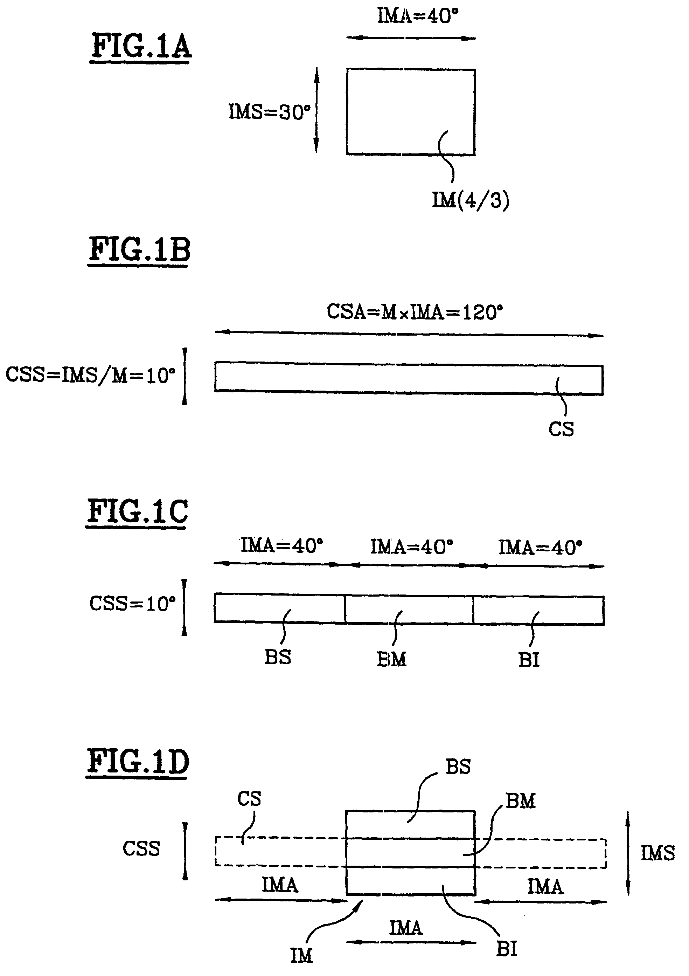

En référence à la figure 1A, une image IM prise par un dispositif de prise de vue classique DP présente un format IMA/IMS = 4/3. Les grands côtés du format correspondent à une première direction de champ, dit champ azimutal, ayant une largeur IMA de 40°. Les petits côtés du format correspondent à une seconde direction de champ, dit champ en site, ayant une hauteur IMS de 30°.

La figure 1B montre la petite base rectangulaire d'un champ pyramidal CS à surveiller par le dispositif de prise de vue DP associé à un système optique selon l'invention. Le champ CS présente une largeur azimutale CSA = M x IMA, où M est un nombre typiquement égal à 3, soit une largeur en azimut CSA de 120°. La hauteur en site CSS du champ CS est dans un rapport IMS/CSS = M avec la hauteur IMS, soit une hauteur en site CSS de 10°.

Selon l'invention, le champ surveillé CS est découpé en M = 3 bandeaux BS, BN et BI juxtaposés suivant la largeur CSA du champ à surveiller, comme montré à la figure 1C, afin que chaque bandeau ait une largeur azimutale CSA/M égale à la largeur azimutale IMA du format des images prises directement par le dispositif de prise de vue. La hauteur en site des bandeaux est égale à la hauteur CSS du champ à surveiller et inférieure à celle IMS du format d'image standard.

Le système optique selon l'invention prend simultanément trois vues correspondant aux trois bandeaux BS, BM et BI, et les réunit optiquement dans le format d'image standard XMA x IMS, comme montrée schématiquement à la figure 1D. Le bandeau BS situé à gauche dans le champ surveillé CS est translaté au-dessus du bandeau médian BM et ainsi en partie supérieure dans le format standard IM. Le bandeau BI situé à droite dans le champ surveillé CS est translaté au-dessous du bandeau médian BM et ainsi en partie inférieure dans le format standard IM. La somme des hauteurs en site des trois bandeaux ainsi superposés verticalement est au plus égale à la hauteur en site IMS du format standard, la largeur azimutale de chaque bandeau n'excédant pas celle IMA du format standard.

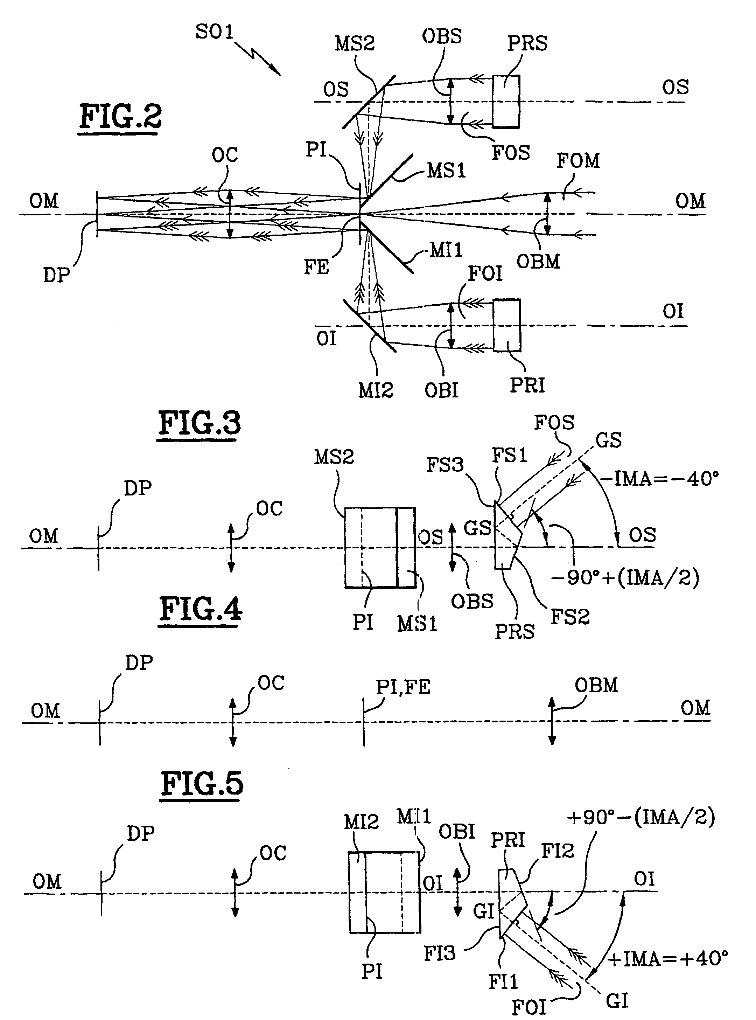

Selon une première réalisation montrée à la figure 2, un système optique SO1 présente trois voies optiques, une voie optique médiane et des voies optiques supérieure et inférieure symétriques par rapport à la voie médiane.

La voie optique médiane rectiligne est définie par l'axe optique linéaire OM-OM du dispositif de prise de vue DP.

A partir du dispositif de prise de vue DP incluant un détecteur infrarouge à l'état solide, la voie optique médiane montrée aux figures 2 et 4 comprend un objectif OC de grandissement 1/1 commun aux trois voies optiques et un objectif d'entrée OBM. Cet objectif d'entrée est situé devant l'objectif OC et couvre un champ IMA x IMS, soit une largeur en azimut IMA = 40° et une hauteur en site IMS = 30°, de manière analogue à un objectif équipant initialement le dispositif de prise de vue DP. Entre les objectifs OC et OBM sont situés deux premiers miroirs MS1 et MI1 disposés symétriquement à 45° par rapport à l'axe optique de voie médiane OM-OM de manière à réfléchir respectivement un 1/M^{ième} = 1/3 en site de faisceaux optiques descendant et montant vers des parties supérieure et inférieure de l'objectif OC. Les extrémités proches des miroirs MS1 et MI1 sont situées dans le plan focal image PI de l'objectif d'entrée OBM qui est intermédiaire entre les objectifs OBM et OC, et qui est symétrique du plan focal image de l'objectif commun OC par rapport à ce dernier, où la matrice du capteur dans le dispositif DP est localisée. Entre les côtés proches des miroirs MS1 et MI1 est prévue une fente centrale FE ayant une largeur égale à IMA/CSS = 4 fois sa hauteur pour transmettre le 1/M^{ième} = 1/3 central en site d'un faisceau optique incident FOM de l'objectif OBM, représentatif du bandeau médian BM, vers le tiers central de l'objectif OC. L'objectif d'entrée OBM peut être un objectif classique au format 4/3 qui ne transmet que le 1/M = 1/3 de vues au moyen de caches supérieur et inférieur.

Les deux miroirs MS1 et MI1 matérialisent la convergence des voies optiques supérieure et inférieure vers la voie optique médiane.

Comme montrés aux figures 2 et 3, la voie optique supérieure comprend depuis le dispositif de prise de vue DP, outre l'objectif commun OC et le premier miroir MS1, un second miroir MS2, un objectif d'entrée OBS et un prisme PRS qui sont alignés suivant un axe optique OS-OS qui est parallèle à l'axe optique de voie médiane OM-OM et superposé verticalement à celui-ci. Le miroir MS2 est parallèle au et en regard du premier miroir MS1, mais a le tiers central de sa surface en regard du tiers inférieur de la surface du premier miroir MS1 afin de ne transmettre qu'un faisceau optique au format 40°/10° = 4/1 dans le tiers supérieur de l'objectif OC.

Le prisme PRS présente une première face FS1 qui est orientée latéralement vers la gauche suivant un axe de gisement GS-GS faisant un angle de -IMA = -40° avec l'axe optique OS-OS. Une seconde face réfléchissante FS2 est adjacente à la face FS1 et tournée avec celle-ci vers l'extérieur à l'opposé de l'objectif d'entrée OBS, et fait un angle de 90° - (IMA/2) = 70° avec l'axe optique OS-OS. Une troisième face semi-réfléchissante FS3 du prisme PRS est perpendiculaire à l'axe optique OS-OS, orientée vers l'objectif d'entrée OBS. L'objectif d'entrée OBS sert à la mise au point des vues dans la voie optique supérieure. Devant la face FS1, l'objectif d'entrée OBS couvre sensiblement un champ ayant, comme celui couvert par l'objectif de voie médiane OBM, une largeur en azimut de 40° environ et une hauteur en site de 10° environ et orientée avec un angle de gisement de -IMA = -40° par rapport aux axes optiques parallèles OS-OS et OM-OM de manière à couvrir le champ correspondant au bandeau BS situé à gauche dans le champ surveillé CS.

Un faisceau optique incident supérieur gauche FOS correspondant au bandeau BS et traversant perpendiculairement la première face FS1 est réfléchi totalement sur la face semi-réfléchissante FS3 à l'intérieur du prisme PRS. Le faisceau optique est ensuite réfléchi totalement par la face FS2 en un faisceau émergeant suivant l'axe optique OS-OS. Le prisme PRS constitue ainsi un moyen déviateur en gisement de l'axe optique principal du dispositif DP. Le faisceau émergent traverse l'objectif d'entrée OBS, est réfléchi suivant une direction verticale par le second miroir MS2, et est enfin réfléchi parallèlement à l'axe de voie médiane OM-OM par le premier miroir MS1 en direction du tiers supérieur de l'objectif commun OC du dispositif de prise de vue DP. Comme pour l'objectif d'entrée OBM, le plan image intermédiaire PI est le plan focal image de l'objectif d'entrée OBS à travers les miroirs MS2 et MS1.

La voie optique inférieure est symétrique de la voie optique supérieure par rapport à l'axe optique de voie médiane OM-OM, et possède un prisme PRI dont l'orientation est symétrique de celle du prisme PRS par rapport à un plan vertical matérialisé par le plan de la figure 2. La voie optique inférieure couvre un champ correspondant au bandeau BI situé à droite dans le champ surveillé CS, c'est-à-dire suivant un axe de gisement GI-GI faisant un angle de gisement IMA = +40° avec l'axe OM-OM, lequel angle est opposé au gisement de -40° dans la voie optique supérieure. La voie optique inférieure comprend également le long d'un axe optique OI-OI un second miroir MI2 et un objectif d'entrée OBI symétriques respectivement du miroir MS2 et de l'objectif d'entrée OBS par rapport à l'axe optique OM-OM.

Le prisme PRI comprend une première face FI1 symétrique de la face FS1, c'est-à-dire faisant un angle de gisement de IMA = +40° avec l'axe optique OI-OI, une seconde face réfléchissante FI2 faisant un angle de 90° - (IMA/2) = 70° avec l'axe optique OI-OI, et une troisième face semi-réfléchissante FI3 perpendiculaire à l'axe optique OI-OI et orientée vers l'objectif d'entrée OBI. Un faisceau optique incident FOI provenant de la direction en gisement à +40° est dévié suivant l'axe optique OI-OI dans le prisme FI2 par deux réflexions totales par la troisième face FI3 et puis la seconde face FI2. Le faisceau traverse ensuite l'objectif d'entrée inférieur OBI, est réfléchi par le miroir MI2, et enfin est réfléchi par le miroir MI1 en direction du tiers inférieur de l'objectif commun OC du dispositif de prise de vue DP, parallèlement à l'axe optique de voie médiane OM-OM.

Dans une variante plus compacte, chaque paire de miroirs parallèles MS1 et MS2, MI1 et MI2, est remplacée par un prisme ayant deux faces réfléchissantes en regard et parallèles. Le système optique atteint en pratique la taille d'une boîte d'allumettes.

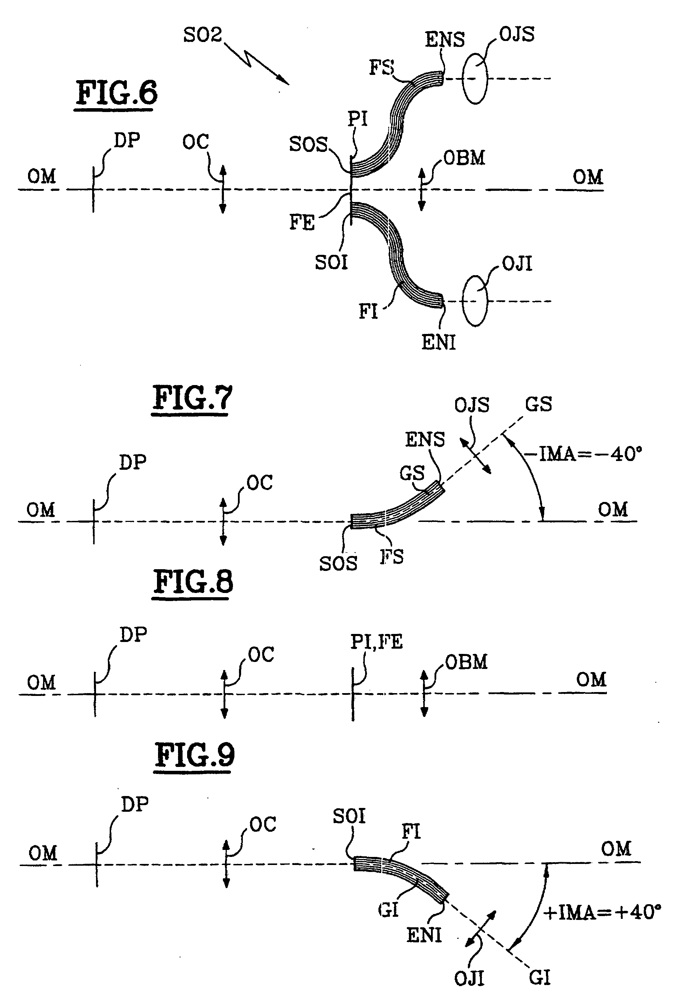

Selon une seconde réalisation conforme à l'invention montrée aux figures 6, 7, 8 et 9, un système optique SO2 comprend également une voie optique médiane, une voie optique supérieure ayant un axe de gisement GS-GS et une voie optique inférieure ayant un axe de gisement GI-GI. Comme dans la première réalisation, la voie optique médiane comprend le long d'un axe optique OM-OM confondu avec l'axe optique du dispositif de prise de vue DP, un objectif commun OC, une fente FE de format 4/1 dans un plan image intermédiaire PI et un objectif d'entrée OBM tourné vers l'extérieur. Les voies optiques supérieure et inférieure sont encore symétriques par rapport à l'axe optique de voie médiane OM-OM.

Dans chacune des voies supérieure et inférieure du système optique SO2, un faisceau de fibres optiques FS, FI remplace l'ensemble composé par le miroir MS1, MI1, le miroir MS2, MI2, et le prisme PRS, PRI dans le premier système optique SO1. Chaque fibre optique dans le faisceau correspond de préférence à un pixel sur le plan image dans le dispositif DP, c'est-à-dire à une cellule CCD de détecteur matriciel, ce qui améliore la résolution du système optique.

Une face d'entrée ENS, ENI du faisceau de fibres optiques FS, FI est dirigée suivant l'angle de gisement respectif de -IMA = -40°, +IMA = +40° à travers un objectif d'entrée OJS, OJI ayant une fonction équivalente à l'objectif d'entrée OBS, OBI. En d'autres termes, la direction GS-GS, GI-GI de la face d'entrée ENS, ENI forme avec l'axe optique de voie médiane OM-OM un angle de gisement respectif de +40°, -40° dans un plan horizontal, comme montré à la figure 7, 9. Le plan focal image de l'objectif OJS, OJI est sensiblement dans le plan de la face d'entrée ENS, ENI du faisceau de fibres optiques FS, FI lequel reporte ce plan focal image dans le plan image intermédiaire PI. En effet, l'autre face, dite face de sortie, SOS, SOI du faisceau de fibres optiques FS, FI est située dans le plan image PI commun aux trois voies optiques. Le faisceau de fibres optiques FS, FI est ainsi développé sensiblement en S vrillé.

Devant l'objectif de dispositif de prise de vue OC, l'objectif d'entrée OBM transmet un faisceau optique passant entre les faces de sortie de faisceau de fibres optiques SOS et SOI de manière à transmettre une image de format 4/1 correspondant au bandeau de champ médian BM dans le champ surveillé CS. Parallèlement, les extrémités SOS et SOI transmettent des faisceaux optiques correspondant aux bandeaux BS et BI de format 4/1 situés à gauche et à situés à gauche et à droite dans le champ surveillé CS. Comme dans la première réalisation, après des mises au point indépendantes au moyen des objectifs d'entrée OJS, OBM et OSI et une dernière mise au point avec l'objectif commun OC, les images transmises par les trois faisceaux optiques en direction de l'objectif commun OC sont ainsi superposées verticalement à partir du plan image PI commun aux extrémités de faisceau de fibres optiques SOS et SOI, chaque image occupant 1/M^{ième} = 1/3 de la hauteur en site IMS de l'image résultante, comme montrée à la figure 1D.

Bien que les réalisations décrites ci-dessus partage un champ surveillé CS en trois bandeaux BS, BM et BI, l'invention concerne également un champ surveillé partagé en deux bandeaux tels que BM et BS. Chacun desdits deux bandeaux a une largeur en azimut au plus égale à celle IMA du champ couvert initialement par le dispositif DP, c'est-à-dire au plus égale à l'angle de gisement entre l'axe GS-GS et l'axe optique OM-OM. La hauteur en site de chacun desdits deux bandeaux et donc du champ surveillé est alors au plus égale à la moitié de la hauteur en site IMS du champ couvert par le dispositif DP.

Des formats d'image résultante autres que le format 4/3 d'image rectangulaire IM peuvent être choisis. Par exemple, lorsque le dispositif de prise de vue est une caméra infrarouge standard ayant un détecteur matriciel carré de 256 x 256 capteurs CCD et donc présentant un format 1/1, le format carré est divisé en trois bandeaux rectangulaires superposés. Chaque bandeau couvre un champ ayant une largeur en azimut de 40° et une hauteur en site de 40°/3 = 13,3°.

Plus généralement, pour couvrir un très large champ d'ouverture azimutale quelconque CSA, K paires de voies optiques supérieure et inférieure de type selon la première ou seconde réalisation sont prévues pour surveiller des champs respectifs ayant une largeur azimutale IMA = CSA/M suivant des directions de gisement de ±(K.IMA) par rapport à l'axe optique de voie médiane OM-OM, où K est un entier supérieur à 1 tel que M = 2K + 1 et IMA une largeur de champ standard. La hauteur en site du bandeau couvert par chaque voie optique peut être comprise entre 10° et 45° environ. Par exemple, avec un champ très large, l'image résultante peut montrer l'origine et l'apogée, voire l'impact, d'un projectile, ou les extrémités d'une longue clôture à surveiller.

Afin de faciliter la lecture des images de vue sur un écran, les bandeaux d'image tels que BS, BM et BI peuvent être traités numériquement pour présenter les images juxtaposées horizontalement, et non pas superposées. Un tel traitement peut être complété pour supprimer des zones de chevauchement aux frontières des bandeaux aussi bien horizontales que verticales et pour corriger des aberrations des objectifs.

## Revendications

1. Système optique disposé devant un dispositif de prise de vue (DP) ayant un axe optique linéaire (OM-OM) et un champ avec une largeur en azimut (IMA) inférieure à celle (CSA) d'un grand champ et une hauteur en site (IMS) supérieure à celle (CSS) du grand champ, et comprenant des premier et second moyens optiques couvrant des champs (BM, BS) sensiblement juxtaposés dans le grand champ (CS) et ayant chacun une largeur en azimut sensiblement égale à la largeur en azimut du dispositif de prise de vue et une hauteur en site au plus égale à la moitié de la hauteur en site (IMS) du champ du dispositif de prise de vue, **caractérisé en ce que** le premier moyen optique (OBM, OC) prend des vues devant le dispositif de prise de vue (DP) et a un axe optique confondu avec l'axe optique (OM-OM) du dispositif de prise de vue (DP), et le second moyen optique (PRS, OBS, MS2, MS1; OJS, FS) prend des vues devant le dispositif de prise de vue et suivant un axe de gisement (GS-GS) faisant un angle de gisement avec l'axe optique (OM-OM) au plus égal à la largeur en azimut (IMA) du champ du dispositif de prise de vue.

2. Système optique conforme à la revendication 1, dans lequel le second moyen optique comprend un moyen déviateur (PRS, MS2, MS1; FS) pour acheminer un faisceau optique incident (FOS) suivant ledit angle de gisement vers une direction parallèle à l'axe optique (OM-OM) du dispositif de prise de vue (DP) et traversant un objectif (OC) commun aux premier et second moyens optiques.

3. Système optique conforme à la revendication 2, dans lequel le moyen déviateur (PRS, MS2, MS1) achemine ledit faisceau optique incident (FOS) suivant une ligne brisée (GS-GS, OS-OS, MS2-MS1).

4. Système optique conforme à la revendication 2 ou 3, dans lequel le moyen déviateur comprend un prisme (PRS) pour dévier ledit faisceau optique incident (FOS) suivant un axe optique (OS-OS) d'un objectif d'entrée (OBS) parallèle à l'axe optique (OM-OM) du dispositif de prise de vue (DP), et deux moyens de réflexion parallèles (MS2, MS1) pour dévier un faisceau optique qui émerge dudit prisme (PRS) à travers ledit objectif d'entrée (OBS), d'abord perpendiculairement puis parallèlement à l'axe optique de dispositif de prise de vue (OM-OM), les premier et second moyens optiques ayant un plan focal image intermédiaire (PI) qui est commun à l'objectif d'entrée (OBS) dans le moyen déviateur et à un objectif d'entrée (OBM) dans le premier moyen optique situé sur l'axe optique de dispositif de prise de vue (OM-OM) devant ledit objectif commun (OC).

5. Système optique conforme à la revendication 4, dans lequel le prisme (PRS) comprend une première face (FS1) perpendiculaire à l'axe de gisement (GS-GS), une seconde face réfléchissante (FS2) qui, avec l'axe optique (OS-OS) de l'objectif d'entrée (OBS) du moyen déviateur, fait un angle complémentaire à la moitié de l'angle de gisement, et une face semi-réfléchissante (FS3) perpendiculaire à l'axe optique (OS-OS) de l'objectif d'entrée (OBS) du moyen déviateur.

6. Système optique conforme à la revendication 2, dans lequel le moyen déviateur (FS) achemine le faisceau optique incident (FOS) suivant un chemin curviligne.

7. Système optique conforme à la revendication 2 ou 6, dans lequel le moyen déviateur comprend un faisceau de fibres optiques (FS) ayant une face d'entrée (ENS) perpendiculaire à l'axe de gisement (GS-GS) et ayant une face de sortie (SOS) qui est située dans un plan image intermédiaire (PI) perpendiculaire à l'axe optique (OM-OM) du dispositif de prise de vue (DP), à proximité de cet axe optique et face audit objectif commun (OC), et un objectif d'entrée (OJS) dont l'axe optique est l'axe de gisement (GS-GS) et ayant un plan focal image sensiblement confondu avec la face d'entrée de faisceau de fibres optiques (ENS).

8. Système optique conforme à l'une quelconque des revendications 1 à 7, comprenant un troisième moyen optique (PRI, OBI, MI2, MI1; OJI, FI) analogue au second moyen optique (PRS, OBS, MS2, MS1; OJS, FS) et symétrique de celui-ci par rapport à l'axe optique (OM-OM) du dispositif de prise de vue (DP) pour prendre des vues suivant un axe de gisement (GI-GI) faisant un angle de gisement opposé à l'angle de gisement relatif au second moyen optique.

## Patentansprüche

1. Optisches System, angeordnet vor einer Aufnahmevorrichtung (DP) mit linearer optischer Achse (OM-OM) und einem Bildwinkel mit einer kleineren Azimutbreite (IMA), als ein Weitwinkel (CSA) und einer größeren Winkelhöhe (IMS), als der (CSS) des Weitwinkels und erste und zweite optische Mittel umfassend, die Bildwinkel (BM, BS) abdecken, die im Weitwinkel (CS) im wesentlichen aneinander grenzen und jedes eine Azimutbreite aufweist, die im wesentlichen gleich der Azimutbreite der Aufnahmevorrichtung ist und eine Winkelhöhe, die höchstens der Hälfte der Winkelhöhe (IMS) des Bildwinkels der Aufnahmevorrichtung gleich ist, **dadurch gekennzeichnet, dass** das erste optische Mittel (OBM, OC) vor der Aufnahmevorrichtung (DP) Aufnahmen macht und dessen optische Achse mit der optischen Achse (OM-OM) der Aufnahmevorrichtung (DP) zusammenfällt, und das zweite optische Mittel (PRS, OBS, MS2, MS1; OJS, FS) vor der Aufnahmevorrichtung und einer Peilachse (GS-GS) entsprechend Aufnahmen macht, die mit der optischen Achse (OM-OM) einen Peilwinkel einschließt, der höchstens gleich der Azimutbreite (IMA) des Bildwinkels der Aufnahmevorrichtung ist.

2. Optisches System nach Patentanspruch 1, in dem das zweite optische Mittel ein Ablenkmittel (PRS, MS2, MS1; FS) aufweist, um einen einfallenden Strahl (FOS) entsprechend dem genannten Peilwinkel in eine Richtung zu leiten, die zur optischen Achse (OM-OM) der Aufnahmevorrichtung (DP) parallel ist und ein Objektiv (OC) durchquert, das dem ersten und zweiten optischen Mittel gemeinsam ist.

3. Optisches System nach Patentanspruch 2, in dem das Ablenkmittel (PRS, MS2, MS1) den genannten einfallenden Strahl (FOS) einer Zickzacklinie (GS-GS, OS-OS, MS2-MS1) entsprechend leitet.

4. Optisches System nach Patentanspruch 2 oder 3, in dem das Ablenkmittel ein Prisma (PRS) umfasst, um den genannten einfallenden Strahl (FOS) entsprechend einer optischen Achse (OS-OS) eines Eingangsobjektivs (OBS) parallel zur optischen Achse (OM-OM) der Aufnahmevorrichtung (DP) zu leiten, und zwei Parallelreflexionsmittel (MS2, MS1), um einen Strahl, der aus dem genannten Prisma (PRS) austritt, durch das genannte Eingangsobjektiv (OBS) zu leiten, zunächst senkrecht und dann parallel zur optischen Achse der Aufnahmevorrichtung (OM-OM), wobei die ersten und zweiten optischen Mittel eine Zwischenbildebene (PI) aufweisen, die dem Eingangsobjektiv (OBS) im Ablenkmittel und einem Eingangsobjektiv (OBM) im ersten optischen Mittel gemeinsam ist, das auf der optischen Achse der Aufnahmevorrichtung (OM-OM) vor dem genannten gemeinsamen Objektiv (OC) angeordnet ist.

5. Optisches System nach Patentanspruch 4, in dem das Prisma (PRS) eine erste Fläche (FS1) senkrecht zur Peilachse (GS-GS) aufweist, eine zweite reflektierende Fläche (FS2), die mit der optischen Achse (OS-OS) des Eingangsobjektivs (OBS) des Ablenkmittels einen Ergänzungswinkel zur Hälfte des Peilwinkels einschließt, und eine halbdurchlässige Fläche (FS3), die auf der optischen Achse (OS-OS) des Eingangsobjektivs (OBS) des Ablenkmittels senkrecht steht.

6. Optisches System nach Patentanspruch 2, in dem das Ablenkmittel (FS) den einfallenden Strahl (FOS) längs einer kurvenförmigen Bahn leitet.

7. Optisches System nach Patentanspruch 2 oder 6, in dem das Ablenkmittel ein Lichtleiterbündel (FS) umfasst, dessen Eintrittsfläche (ENS) senkrecht auf der Peilachse (GS-GS) steht, und eine Austrittsfläche (SOS), die in einer Zwischenbildebene (PI) liegt, die auf der optischen Achse (OM-OM) der Aufnahmevorrichtung (DP) senkrecht steht, nahe dieser optischen Achse und dem genannten gemeinsamen Objektiv (OC) gegenüber, und ein Eingangsobjektiv (OJS), dessen optische Achse die Peilachse (GS-GS) ist und dessen Bildebene im wesentlichen mit der Eintrittsfläche des Lichtleiterbündels (ENS) zusammenfällt.

8. Optisches System nach irgendeinem der Patentansprüche 1 bis 7, ein drittes optisches Mittel (PRI, OBI, MI2, MI1; OJ1, FI) umfassend, ähnlich dem zweiten optischen Mittel (PRS, OBS, MS2, MS1; OJS, FS) und relativ zur optischen Achse (OM-OM) der Aufnahmevorrichtung (DP) symmetrisch zu diesem, um Aufnahmen entsprechend einer Peilachse (GI-GI) zu machen, die einen Peilwinkel bildet, der dem Peilwinkel des zweiten optischen Mittels entgegengesetzt ist.

## Claims

1. An optical system located in front of an imaging device (DP) having a linear optical axis (OM-OM) and a field with an azimuth width (IMA) less than that (CSA) of a wide-angle field and an elevation height (IMS) greater than that (CSS) of the wide-angle field, and comprising first and second optical means covering substantially juxtaposed fields (BM, BS) in the wide-angle field (CS) and each having an azimuth width substantially equal to the azimuth width of the imaging device and an elevation height not greater than half the elevation height (IMS) of the field of the imaging device, **characterized in that** the first optical means (OBM, OC) images views in front of the imaging device (DP) and has an optical axis coinciding with the optical axis (OM-OM) of the imaging device (DP), and the second optical means (PRS, OBS, MS2, MS1 ; OJS, FS) images views in front of the imaging device and along a bearing axis (GS-GS) at a bearing angle to the optical axis (OM-OM) at most equal to the azimuth width (IMA) of the field of the imaging device.

2. The optical system according to claim 1, wherein the second optical means comprises deflector means (PRS, MS2, MS,; FS) for deflecting an incident light beam (FOS) at said bearing angle toward a direction parallel to the optical axis (OM-OM) of the imaging device (DP) and passing through an objective (OC) common to the first and second optical means.

3. The optical system according to claim 2, wherein the deflector means (PRS, MS2, MS1) diverts said incident light beam (FOS) along a broken line (GS-GS, OS-OS, MS2-MS1).

4. The optical system according to claim 2 ou 3, wherein the deflector means comprises a prism (PRS) for deflecting said incident light beam (FOS) along an optical axis (OS-OS) of an entry objective (OBS) parallel to the optical axis (OM-OM) of the imaging device (DP), and two parallel reflector means (MS2, MS1) for deflecting a light beam that emerges from said prism (PRS) through said entry objective (OBS), firstly perpendicularly and subsequently parallel to the optical axis of the imaging device (OM-OM), the first and second optical means having an intermediate image focal plane (PI) that is common to the entry objective (OBS) in the deflector means and to an entry objective (OBM) in the first optical means situated on the optical axis of the imaging device (OM-OM) in front of said common objective (OC).

5. The optical system according to claim 4, wherein the prism (PRS) has a first face (FS1) perpendicular to the bearing axis (GS-GS), a reflective second face (FS2) at an angle to the optical axis (OS-OS) of the entry objective (OBS) of the deflector means complementary to half the bearing angle, and a semi-reflective face (FS3) perpendicular to the optical axis (OS-OS) of the entry objective (OBS) of the deflector means.

6. The optical system according to claim 2, wherein the deflector means (FS) deflects the incident light beam (FOS) along a curvilinear path.

7. The optical system according to claim 2 or 6, wherein the deflector means comprises a bundle of optical fibers (FS) having an entrance face (ENS) perpendicular to the bearing axis (GS-GS) and having an emergent face (SOS) which is located in an intermediate image plane (PI) perpendicular to the optical axis (OM-OM) of the imaging device (DP), is near the optical axis and faces said common objective (OC), and an entry objective (OJS) the optical axis of which is the bearing axis (GS-GS) and having an image focal plane substantially coincident with the entrance face of the bundle of optical fibers.

8. The optical system according any one of claims 1 to 7, comprising third optical means (PRI, OBI, MI2, MI1 ; OJI, FI) analogous to the second optical means (PRS, OBS, MS2, MS1 ; OJS, FS) and symmetrical thereto about the optical axis (OM-OM) of the imaging device (DP) to image views along a bearing axis (GI-GI) at a bearing angle opposite to the bearing angle relating to the second optical means.
